# EUROPEAN PATENT APPLICATION

(11) **EP 1 457 866 A2**
(43) Date of publication of application: **15.09.2004**
(21) Application number: 03028988.8
(22) Date of filing: 17.12.2003
(51) Int. Cl.: G06F 3/033

(54) **Information processing apparatus and display control method**

(30) Priority: 16.01.2003 JP 2003008147
(71) Applicant: Kabushiki Kaisha Toshiba, Tokyo (JP)
(72) Inventor: Baba, Kunio, Tokyo 105-8001 (JP); Nakamura, Seiichi, Tokyo 105-8001 (JP); Hirabayashi, Hirotada, Tokyo 105-8001 (JP); Ogawa, Takehiro, Tokyo 105-8001 (JP)
(74) Representative: Henkel, Feiler & Hänzel

(57) **Abstract**

In a slideshow window (901), a graphic (904) used to operate a slider bar, and graphics (905) used to operate various buttons are displayed in addition to a picture display field for displaying each slide. When an arbitrary position of a bar in the graphic (904) is clicked, a slider (904a) moves to that position. The slider (904a) also moves along the bar when it is dragged. In particular, a slide of the corresponding number is displayed in the picture display field (902) in correspondence with the moving position of the slider (904a).

## Description

The present invention relates to an information processing apparatus and a display control method for displaying a plurality of still pictures.

In recent years, presentations using presentation software and image display software have become prevalent in briefings, meetings, and the like. Such presentation software or the like normally has a slideshow function.

The slideshow function sequentially displays a plurality of slides (still pictures) based on JPEG data or the like. This function can execute a process for automatically switching still pictures in turn every time a predetermined period elapses, and a process for switching still pictures in turn every time the user presses a predetermined button.

Upon executing such a slideshow, buttons required for the user to make various operations associated with picture playback can be displayed on a screen. As the types of buttons, "play", "stop", "pause", "next", "back", and the like are available.

When the user wants to display a certain slide, he or she clicks the "next" or "back" button several times. For example, when the user wants to display a slide immediately before the currently displayed slide or to display the next slide, he or she can achieve his or her object by clicking the "back" or "next" button only once. However, when the user wants to display a slide whose place in the display order is far from the currently displayed slide (e.g., when the user wants to display the last slide immediately after the beginning of the slideshow), he or she must click the "back" or "next" button time and again, resulting in troublesome operation for the user.

A technique for switching a picture to be displayed by operating buttons is disclosed in, e.g., Jpn. Pat. Appln. KOKAI Publication No. 4-236624 (e.g., FIG. 1). According to this reference, the play start position of audio/video information can be designated using a "rewind button", "fast-forward button", "slider button", and the like, and the playback state can be acquired well.

However, the technique of the above reference is not for still pictures based on JPEG data or the like but for a moving picture. For this reason, it is difficult to designate an arbitrary "still picture" and to display that still picture in the window, although it may be possible to acquire the playback state of a "moving picture" from an arbitrary timing.

Embodiments of the present invention may provide an information processing apparatus and a display control method, which can easily display a desired still picture.

According to one aspect of the present invention, there is provided an information processing apparatus comprising a processing unit configured to display a picture display field to display a plurality of still pictures and an operation field which includes a slider to designate one of the plurality of still pictures to be displayed; and a control unit configured to control to display a still picture having a number corresponding to a position of the slider in the picture display field.

According to another aspect of the present invention, there is provided a display control method for use in an information processing apparatus capable of displaying a picture display field to display a plurality of still pictures, comprising displaying an operation field which includes a slider to designate one of the plurality of still pictures to be displayed; and controlling to display a still picture having a number corresponding to a position of the slider in the picture display field.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a diagram showing the arrangement of a home network system using an information processing apparatus according to an embodiment of the present invention;
FIG. 2 is a block diagram showing the arrangement of a wireless AV station;
FIG. 3 is a'block diagram showing the arrangement of each information processing apparatus serving as a client;
FIG. 4 shows a slideshow window displayed on a display monitor of the information processing apparatus;
FIG. 5 is a view for explaining a switching operation of slides to be displayed;
FIG. 6 is a block diagram showing the functional arrangement of GUI control software used to control GUI-related parts of the slideshow;
FIG. 7 is a block diagram showing the functional arrangement of an operation determination unit shown in FIG. 6;
FIG. 8 is a block diagram showing the detailed functional arrangement of a display process execution unit shown in FIG. 6; and
FIG. 9 is a flowchart showing the operation of the GUI control software of the embodiment.

Embodiments of the present invention will be described below with reference to the drawings.

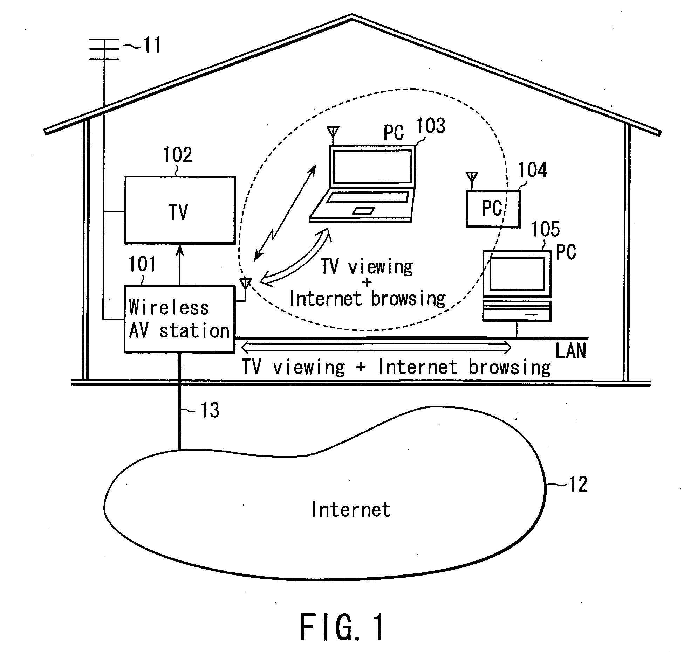

FIG. 1 shows the arrangement of a home network system using an information processing apparatus according to an embodiment of the present invention.

This home network system includes a wireless AV (audio/video) station 101, TV receiver 102, notebook personal computers 103 and 104, desktop personal computer 105, and the like.

The wireless AV station 101 serves as a home network server. This wireless AV station 101 provides services associated with viewing of broadcast programs of the TV or the like, Internet browsing, and the like to information processing apparatuses such as the personal computers 103 to 105 and the like via a wireless or wired network in the house.

The wireless AV station 101 is connected to an external global network (external network) such as the Internet 12 or the like via a communication line 13 such as ISDN (Integrated Services Digital Network), ADSL (Asymmetric Digital Subscriber Line), CATV (Cable TV), or the like. Furthermore, the wireless AV station 101 is connected to various information processing apparatuses in the home via a wired or wireless network which forms the home network.

Each of the personal computers 103 to 105 serves as a client of the wireless AV station 101. The notebook personal computers 103 and 104 have wireless communication devices, and can establish wireless connection to the wireless AV station 101. The desktop personal computer 105 is connected to the wireless AV station 101 via a wired LAN.

The wireless AV station 101 connects the personal computers 103 to 105 to the Internet 12 to exchange data between Web sites on the Internet 12 and the personal computers 103 to 105.

An antenna cable connected to an outdoor TV broadcast reception antenna 11 is led indoors. The TV receiver 102 and wireless AV station 101 are connected to that antenna cable. Broadcast program data transmitted from a broadcasting station can be received and reproduced by the TV receiver 102, and can also be received by the wireless AV station 101. The wireless AV station 101 wirelessly transmits the received broadcast program data to the notebook personal computers 103 and 104 via a wireless LAN. Or the wireless AV station 101 wirelessly transmits the received broadcast program data to the desktop personal computer 105 via the wired LAN.

The wireless AV station 101 provides the following principal functions:

### • Wireless router function:

A wireless router function is a function of wirelessly connecting each information processing apparatus which can communicate with the wireless AV station 101 via the wireless LAN to the Internet 12, and exchanging data between Web sites on the Internet 12 and that information processing apparatus. The user can wirelessly browse the Internet anywhere in the home using the notebook personal computer 103 or 104, which can be connected to the wireless AV station 101 via the wireless LAN.

### • TV function:

A TV function is a function of transmitting broadcast program data received by the wireless AV station 101 to each information processing apparatus connected to the wireless AV station 101 via the wireless or wired LAN. The user can view broadcast program data (live video), which is now on the air, anywhere in the home using the notebook personal computer 103 or 104.

### ·TV video recording function:

The wireless AV station 101 incorporates a magnetic disk drive device (hard disk drive; HDD) as a large-capacity storage device for recording broadcast program data. The wireless AV station 101 can wirelessly transmit broadcast program data, which is now on the air, to the information processing apparatuses, while recording that broadcast program data on the magnetic disk drive device as a file. Also, the wireless AV station 101 can wirelessly transmit broadcast program data which has already been recorded on the magnetic disk drive device to the information processing apparatuses, while recording other broadcast program data, which is now on the air, on the magnetic disk drive device. Furthermore, the wireless AV station 101 can output broadcast program .data recorded on the magnetic disk drive device to the TV receiver 102.

### • Content server function:

The wireless AV station 101 can transmit various content such as broadcast program data and the like, which are recorded as files on the magnetic disk drive device, to the information processing apparatus as a request source in response to a data acquisition request from that information processing apparatus.

### • Remote control function:

The TV function, TV video recording function, and the like of the wireless AV station 101 can be remotely controlled by each of the personal computers 103 to 105. Also, the TV function, TV video recording function, and the like of the wireless AV station 101 can be controlled using a dedicated remote controller unit used to operate the wireless AV station 101. Furthermore, the wireless AV station 101 can be remotely controlled by a portable phone, personal computer, or the like via the Internet.

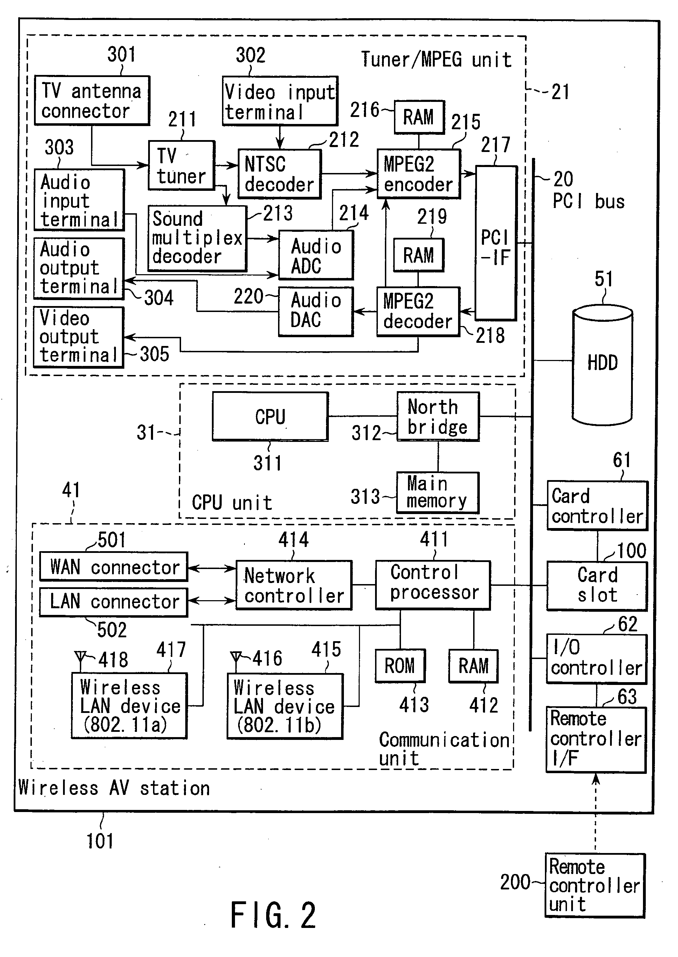

The arrangement of the wireless AV station 101 will be described below with reference to FIG. 2.

As shown in FIG. 2, the wireless AV station 101 roughly includes three major components, i.e., a tuner/MPEG unit 21, CPU unit 31, and communication unit 41.

The tuner/MPEG unit 21, CPU unit 31, and communication unit 41 are respectively connected to a bus 20 such as a PCI bus or the like. Also, a magnetic disk drive device (hard disk drive; HDD) 51 is connected to the bus 20.

The tuner/MPEG unit 21 executes a reception process of broadcast program data, an encoding process for compression-encoding the received broadcast program data, a decoding process for decoding the compression-encoded TV broadcast program data, and the like. As shown in FIG. 2, the tuner/MPEG unit 21 includes a TV tuner 211, NTSC (National TV Standards Committee) decoder 212, sound multiplex decoder 213, audio analog-to-digital converter (audio ADC) 214, MPEG2 encoder 215, RAM 216, PCI bus interface (PCI-IF) 217, MPEG2 decoder 218, RAM 219, audio digital-to-analog converter (audio DAC) 220, and the like.

The TV tuner 211 is connected to a TV antenna cable via a TV antenna connector 301. The TV tuner 211 is a device for receiving broadcast program data of a channel, which is designated by a viewing request from the personal computers 103 to 105 or a remote controller unit 200. The TV tuner 211 receives a TV broadcast signal and selects a channel on the basis of the viewing request. TV broadcast program data of a certain channel, which is received by the TV tuner 211, is sent to the NTSC decoder 212, which separates the input TV broadcast program data into a video signal (moving picture) and audio signal. Furthermore, the separated signals undergo a conversion process into digital data as needed.

The NTSC decoder 212 is also connected to a video input terminal 302, and can receive video signals from external video devices such as a DVD (Digital Versatile Disc) player, VCR (Video Cassette Recorder), and the like. A sound multiplex signal superposed on the TV broadcast program data is decoded by the sound multiplex decoder 213, and is sent to the audio analog-to-digital converter (audio ADC) 214, which converts the input signal into digital data. The audio analog-to-digital converter (audio ADC) 214 is also connected to an audio input terminal 303, and can receive audio signals from external video/audio devices.

The MPEG2 encoder 215 executes an encoding process for compression-encoding the input video and audio data. This encoding process is executed according to the MPEG2 standards. The RAM 216 is used as working memory of the encoding process executed by the MPEG2 encoder 215. The broadcast program data, which is received by the TV tuner 211, is encoded by the MPEG2 encoder 215 to be converted into an MPEG2 stream.

The PCI bus interface (PCI-IF) 217 connects the tuner/MPEG unit 21 to the bus 20, and allows the tuner/MPEG unit 21 to communicate with the CPU unit 31 and HDD 51 via the bus 20. The PCI bus interface (PCI-IF) 217 incorporates registers which can be accessed by the CPU unit 31. The operations of the TV tuner 211 and MPEG2 encoder 215 are controlled in accordance with commands, which are set in the registers of the PCI bus interface (PCI-IF) 217 by the CPU unit 31.

The MPEG2 decoder 218 decodes the broadcast program data encoded in the MPEG2 format. For example, when encoded broadcast program data recorded on the HDD 51 is to be reproduced via the TV receiver 102, encoded TV broadcast program data, which is read out from the HDD 51, is sent to and decoded (decompressed) by the MPEG2 decoder 218 via the PCI bus interface 217. The RAM 219 is used as working memory of the decoding process executed by the MPEG2 decoder 218. The operation of the MPEG2 decoder 218 is also controlled by commands, which are set in the registers of the PCI bus interface (PCI-IF) 217 by the CPU unit 31.

Video data decoded by the MPEG2 decoder 218 is sent to the TV receiver 102 and the like via a video output terminal 305. Also, audio data decoded by the MPEG2 decoder 218 is converted into an analog signal as needed by the audio digital-to-analog converter (audio DAC) 220, and is then output to an external audio/video device via an audio output terminal 304.

Furthermore, in this embodiment, broadcast program data decoded by the MPEG2 decoder 218 can be input to the MPEG2 encoder 215 again, and can undergo an encoding process. This process is used to execute a down-conversion process for converting the transmission rate (bit rate) of encoded broadcast program data which is recorded on the HDD 51 into a specific transmission rate corresponding to the frequency band of, e.g., the wireless LAN or the like.

More specifically, the transmission rate (bit rate) of encoded broadcast program data (MPEG2 stream) obtained by the encoding process of the MPEG2 encoder 215 varies depending on the image quality (low image quality, standard image quality, high image quality) of broadcast program data to be recorded on the HDD 51. When high image quality is selected, the MPEG2 stream of broadcast program data having a very high transmission rate is recorded on the HDD 51. In this case, the MPEG2 stream of that broadcast program data cannot often be transmitted in real time in the frequency band of a wireless communication. In such a case, a down-conversion process for down-converting the transmission rate of the MPEG2 stream of broadcast program data to be wirelessly transmitted to a specific transmission rate for wireless transmission is executed.

The CPU unit 31 controls the TV tuner 211, MPEG2 encoder 215, and MPEG2 decoder 218 in the tuner/MPEG unit 21, and also controls data read/write accesses from/to the HDD 51. The CPU unit 31 receives commands associated with TV viewing transmitted from the personal computers 103 to 105 and transmits an MPEG2 stream of broadcast program data to be transmitted to the personal computers 103 to 105 to the communication unit 41 via communications with the communication unit 41. The CPU unit 31 includes a CPU 311, a north bridge 312 which connects a CPU bus of the CPU 311 and the PCI bus 20, and a main memory 313.

The communication unit 41 is a communication controller which can serve as a wireless LAN router by itself. The communication unit 41 can establish wireless connection to the personal computers 103 and 104, and is also connected to the personal computer 105 via the wired LAN. The communication unit 41 connects the personal computers 103 to 105 to the Internet 12 in response to requests transmitted from these personal computers 103 to 105, and exchanges data between the personal computers 103 to 105 and the Internet 12. In this case, all data exchange processes between the personal computers 103 to 105 and Internet 12 are done within the communication unit 41, and the CPU unit 31 is not used.

As shown in FIG. 2, the communication unit 41 includes a control processor 411, RAM 412, ROM 413, network controller 414, two wireless LAN devices 415 and 417, WAN connector 501, LAN connector 502, and the like.

The WAN (Wide Area Network) connector 501 is a broadband terminal used to exchange data with the Internet 12. The connector 501 is connected to the communication line 13 via a modem or the like. The LAN connector 502 is connected to the wired LAN in the home.

The network controller 414 is a network control device which controls exchange of data with the Internet 12 via the WAN connector 501, and exchange of data with the home wired LAN via the LAN connector 502. The wireless LAN devices 415 and 417 are wireless communication devices which respectively exchange data with the personal computers 103 and 104 via the wireless LAN. These devices 415 and 417 wirelessly communicate with the personal computers 103 and 104 via corresponding antennas 416 and 418. The wireless LAN device 415 is configured to execute wireless communication complying with IEEE 802.11b. The wireless LAN device 417 is configured to execute wireless communication complying with IEEE 802.11a. Since the two wireless LAN devices 415 and 417 are equipped, wireless communication can be made using either IEEE 802.11b or IEEE 802.11a. The wireless LAN device used in wireless communication is seamlessly switched in correspondence with the wireless communication standard supported by a client, which is wirelessly connected to the wireless AV station 101.

The control processor 411 controls the network controller 414 and wireless LAN devices 415 and 417 to control data exchange between the personal computers 103 to 105 and the Internet 12. More specifically, the control processor 411 includes an IP masquerade function, NAT (Network Address Translation) function, DHCP (Dynamic Host Configuration Protocol) function, and the like as those which are required to operate the communication unit 41 as a wireless router. Furthermore, the control processor 411 is connected to the PCI bus 20, and has a function of notifying the CPU 311 of requests (commands) or the like associated with TV viewing, which are received from the personal computers 103 and 104 via the wireless LAN device 415 or 417, and notifying the CPU 311 of requests (commands) or the like associated with TV viewing, which are received from the personal computer 105 on the wired LAN via the network controller 414.

Moreover, the control processor 411 has a function of transmitting, upon receiving broadcast program data transferred from the CPU 311 via the PCI bus 20, that broadcast program data to a personal computer as a request source via the wireless LAN device 415 or 417, or the network controller 414. In this case, the transmission process of the broadcast program data to the personal computer as the request source is executed parallel with data exchange between that personal computer and the Internet 12.

For example, when the personal computer 103 which can be wirelessly connected to the communication unit 41 is wirelessly browsing the Internet, and broadcast program data requested by that personal computer 103 is to be wirelessly transmitted to the personal computer 103, the control processor 411 controls the wireless LAN device 415 or 417 so that Web content data received from a Web server on the Internet 12 and the broadcast program data encoded by the tuner/MPEG unit 21 are time-divisionally transmitted to the personal computer 103 via wireless communication. More specifically, the control processor 411 executes a process for multiplexing the Web content data and encoded broadcast program data, and time-divisionally transmits the multiplexed Web content data and encoded broadcast program data to the personal computer 103 via wireless communication. In this way, by sending the Web content data and broadcast program data as independent data to the personal computer 103, the personal computer 103 can simultaneously display these Web content data and broadcast program data using corresponding application programs. Also, the display positions and display sizes of windows used to display the Web content data and broadcast program data can be freely changed by the corresponding application programs.

The aforementioned functions of the control processor 411 are implemented by firmware stored in the ROM 413.

Furthermore, the wireless AV station 101 has a card controller 61, I/O controller 62, remote controller interface 63, and the like. The card controller 61 controls accesses to a memory card inserted into a card slot 100 provided to the wireless AV station 101. The card controller 61 is used to, e.g., read out still picture data and audio data stored in the memory card, and to record them on the HDD 51.

The I/O controller 62 and remote controller interface 63 are used to receive remote controller codes which are transmitted from the remote controller unit 200 via infrared ray signals or the like. The received remote controller codes are sent to the CPU unit 31 via the bus 20.

The HDD 51 is used to record various content such as broadcast program data, still picture data, audio data, and the like. The CPU 311 manages content recorded on the HDD 51 as a content database. The content database stores additional information such as a program title name, channel number, song name, genre, artist name, and the like for each content data recorded on the HDD.51. The CPU 311 provides the content of the content database onto the screen of the TV receiver 102 or to each information processing apparatus as a content list menu in response to a command sent from the information processing apparatus or remote controller unit 200. The user can select desired content data with reference to the content list menu.

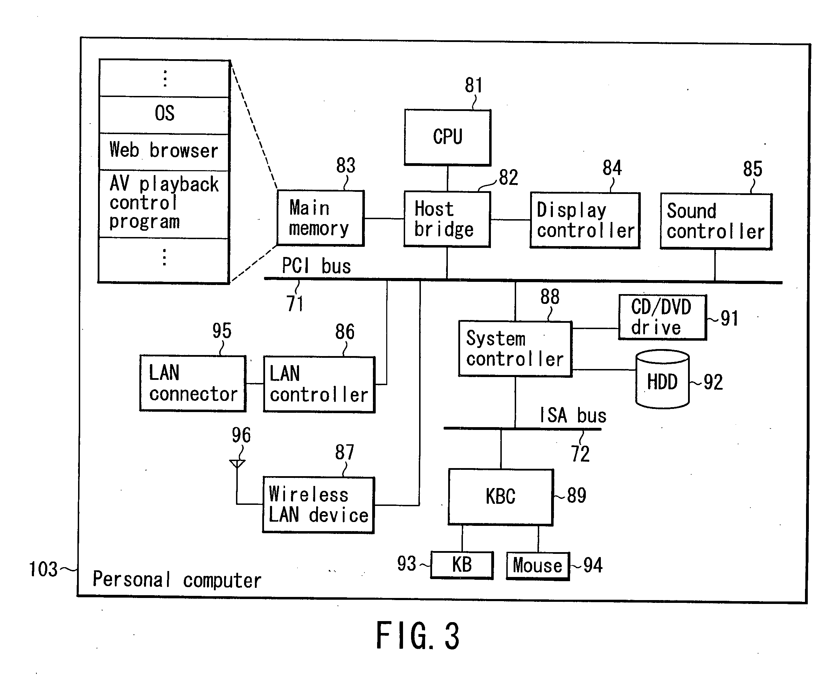

The arrangement of each information processing apparatus serving as a client will be described below with reference to FIG. 3. In this case, the notebook personal computer 103 will be exemplified below.

As shown in FIG. 3, the personal computer 103 includes a PCI bus 71, ISA bus 72, CPU 81, host bridge 82, main memory 83, display controller 84, sound controller 85, LAN controller 86, wireless LAN device 87, system controller 88, keyboard controller (KBC) 89, CD/DVD drive 91, HDD 92, keyboard (KB) 93, mouse 94, LAN connector 95, and the like.

The CPU 81 is a processor for controlling the operation of the personal computer 103, and executes various programs such as an operating system (OS), Web browser, AV playback control program, and the like loaded into the main memory 83. The AV playback control program is an application program used to play back audio/video data (AV data). The AV playback control program has a function of remotely controlling the wireless AV station 101, a function of playing back AV data such as TV broadcast program data, music data, and the like transmitted from the wireless AV station 101, and a function of downloading AV data such as TV broadcast program data, music data, and the like from the wireless AV station 101 as files. Also, the AV playback control program can play back AV data recorded on a recording medium such as a CD/DVD, which is reproduced by the CD/DVD drive 91.

The display controller 84 is a device for controlling a display monitor of the personal computer 103. The sound controller 85 is used as a sound source that outputs sounds corresponding to audio data.

The LAN controller 86 is a device for executing communication with the wireless AV station 101 via the wired LAN. When the LAN connector 95 is connected to the wired LAN, the CPU 81 executes communication with the wireless AV station 101 via the LAN controller 86.

The wireless LAN device 87 is a wireless communication device which exchanges data with the wireless AV station 101 via the wireless LAN. The wireless LAN device 87 wirelessly communicates with the wireless AV station 101 via an antenna 96. The wireless LAN device 87 is configured to make wireless communication complying with IEEE 802.11b or IEEE 802.11a.

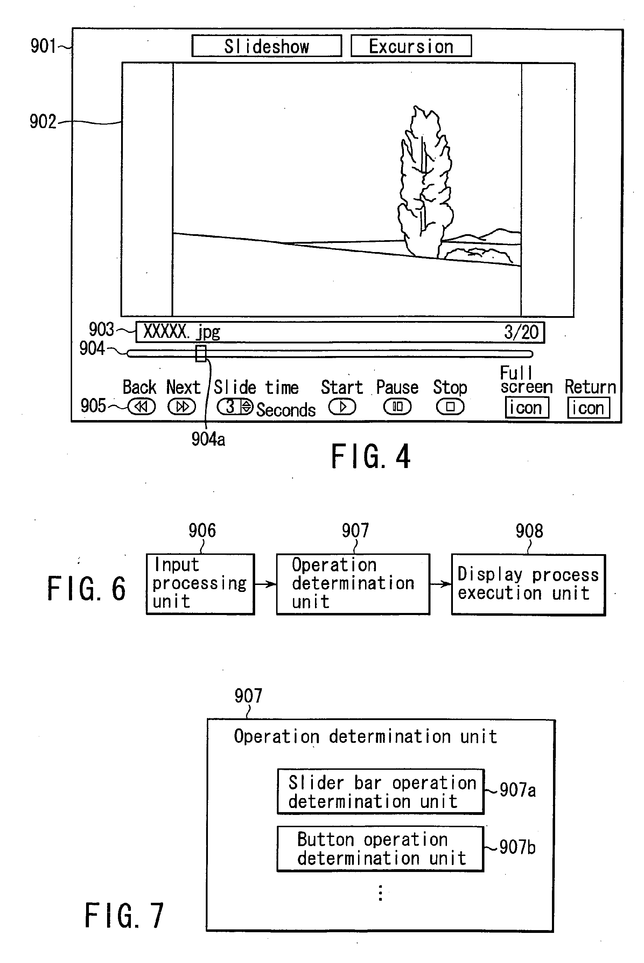

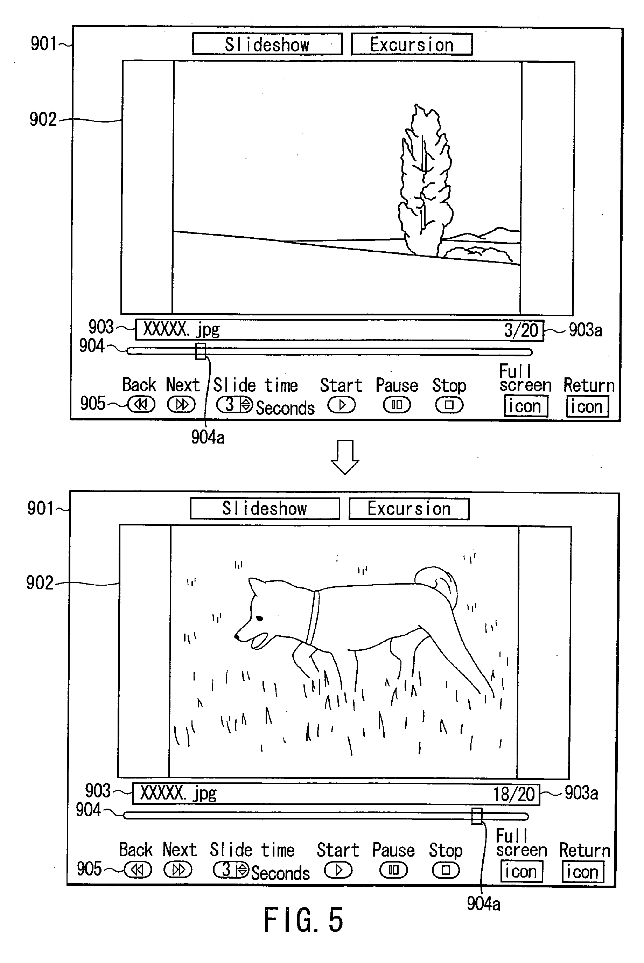

The slideshow window to be displayed on the display monitor of the information processing apparatus of this embodiment will be described below with reference to FIG. 4.

The aforementioned information processing apparatus (personal computers 103 to 105) is installed with presentation software (application software) which implements a slideshow. Individual slides used in the slideshow may be downloaded from the wireless AV station 101. In this embodiment, GUI control software used to control GUI-related parts of the slideshow is installed.

As shown in FIG. 4, a slideshow window 901 with an excursion as a theme is displayed. On this slideshow window 901, a graphic (field) 903 for displaying slide identification information such as "file name", "picture number/total number of slides", and the like of a corresponding slide, a graphic (field) 904 used to operate a slide bar which allows designation of one slide to be displayed, graphics (fields) 905 used to operate various buttons used to instruct "back", "next", "slide time", "start", "pause", "stop", and the like, and so forth are displayed in addition to a picture display field 902 for displaying each slide (a still picture based on, e.g., JPEG data) used in the slideshow.

When an arbitrary position on the bar in the graphic 904 is clicked by a pointing device (mouse or the like), a slider 904a moves to that position. Also, the slider 904a moves along the bar when it is dragged.

In particular, a slide of a corresponding number is always displayed in the picture display field 902 in correspondence with the moving position of the slider 904a. For example, if the bar length is 20 (= total number of slides), when the length from the left end of the bar to the slider position is "3", the "3"rd slide is displayed in the picture display field 902.

The switching operation of slides to be displayed will be described below with reference to FIG. 5.

Assume that the third one of all slides (the total number of slides = 20) is displayed now, as shown in the upper drawing of FIG. 5. At this time, in the graphic 903, "3/20" is displayed as a "picture number/total number of slides" 903a, and the third slide is displayed in the picture display field 902.

In this state, the user moves the slider 904a to a position shown in the lower drawing of FIG. 5 by clicking that position or dragging the slider to that position so as to jump the current third slide to the 18th slide. At this time, in the graphic 903, numerical values "18/20" are displayed as the "picture number/total number of slides" 903a, and the 18th slide is displayed in the picture display field 902. That is, the image number in the graphic 903 and a slide to be displayed in the picture display field 902 always change to corresponding ones in response to the movement of the position of the slider 904a.

FIG. 6 is a block diagram showing the functional arrangement of GUI control software used to control GUI-related parts of the slideshow.

The GUI control software includes an input processing unit 906, operation determination unit 907, and display process execution unit 908.

The input processing unit 906 controls input processes of a pointing device and keyboard with respect to the window. The operation determination unit 907 determines the operation content based on the content of the input processes. The operation determination unit 907 includes a slider bar operation determination unit 907a used to determine a slider bar (including a slider and bar) operation, and a button operation determination unit 907a used to determine various button operations, as shown in FIG. 7. The display process execution unit 908 executes a predetermined display process in accordance with the operation contents of the slider and various buttons.

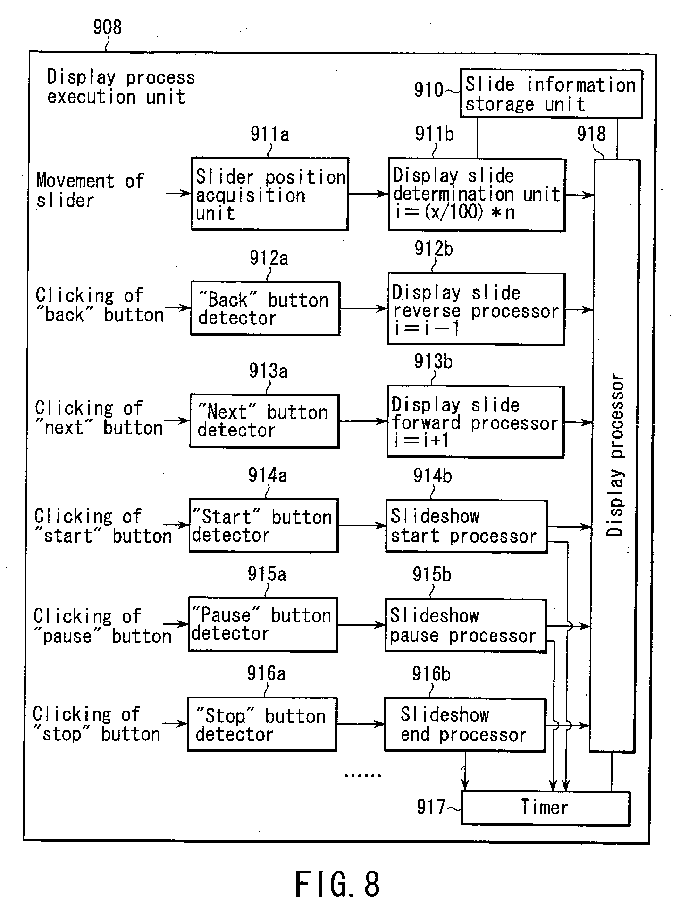

FIG. 8 is a block diagram showing the detailed functional arrangement of the display process execution unit 908 shown in FIG. 6.

The display process execution unit 908 includes a slide information storage unit 910 for storing information associated with a slide, processors 911a and 911b for executing processes according to movement of the slider 904a, processors 912a to 916a and 912b to 916b for executing processes according to clicking of various buttons, a timer 917 for measuring a slide display time, and a display processor 918 for executing a process associated with graphic displays of the slider bar and various buttons in addition to display of a slide (picture display).

The slide information storage unit 910 stores the following information.
a) the total number of slides used in a slideshow: n (e.g., n = 20)
b) the position of the slider on the bar: x (= 1 to 100)
c) a calculation formula of a slide number: i = (x/100) × n
d) correspondence between the file names and slide numbers of slides

The slider position acquisition unit 911a acquires position x of the slider 904a in real time in response to the movement of the slider 904a. The display slide determination unit 911b calculates number i of a slide to be displayed using the predetermined calculation formula on the basis of acquired position x of the slider 904a and the total number n of slides stored in the storage unit 910, and instructs the display processor 918 to display the corresponding slide.

The "back" button detector 912a detects clicking of a "back" button. The display slide reverse processor 912b calculates a value by subtracting 1 from number i of the current display slide upon clicking of the "back" button, and instructs the display processor 918 to display the corresponding slide.

The "next" button detector 913a detects clicking of a "next" button. The display slide forward processor 913b calculates a value by adding 1 to number i of the current display slide upon clicking of the "next" button, and instructs the display processor 918 to display the corresponding slide.

The "start" button detector 914a detects clicking of a "start" button. The slideshow start processor 914b instructs the timer 917 to start time measurement, and instructs the display processor 918 to start a slideshow upon detection of clicking of the "start button".

The "pause" button detector 915a detects clicking of a "pause" button. The slideshow pause processor 915b instructs the timer 917 to alternately pause/restart time measurement, and instructs the display processor 918 to pause/restart a slideshow every time clicking of the "pause" button is detected.

The "stop" button detector 916a detects clicking of a "stop" button. The slideshow end processor 916b instructs the timer 917 to reset time measurement, and instructs the display processor 918 to end a slideshow upon detection of clicking of the "stop" button.

The timer 917 corresponds to a timer function, and starts, pauses, restarts, or resets time measurement in accordance with instructions from various processors.

The display processor 918 refers to information stored in the slide information storage unit 910 and the time measured by the timer 917, and executes predetermined processes in accordance with instructions from various processors 911b to 916b.

For example, the display processor 918 executes a process for deriving a slide corresponding to a number designated by one of the processors 911b to 913b with reference to the storage unit 910, and displaying the corresponding slide. Also, the display processor 918 executes a process for displaying slides in turn at a pre-set time interval, and also a process for pausing, restarting, or ending a slideshow in accordance with an instruction from each of the processors 914b to 916b.

When a slide to be displayed is changed by the button operation, the display processor 918 also executes a process for calculating position x of the slider 904a corresponding to the slide to be displayed using the aforementioned formula, and moving the slider 904a to an appropriate position.

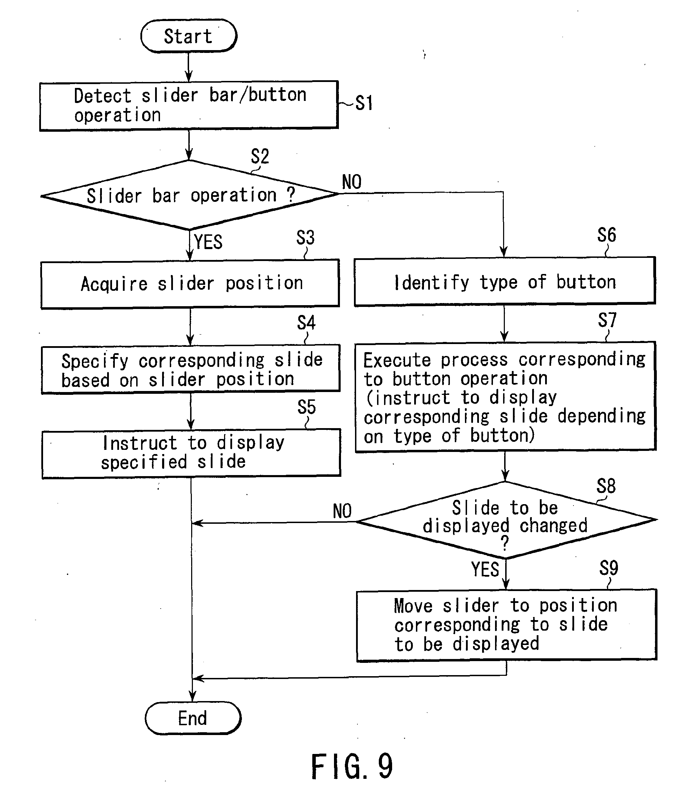

The operation of the GUI control software of this embodiment will be described below with reference to the flowchart of FIG. 9.

In the slideshow window, the operation of the slider bar (clicking on the bar, dragging of the slider 904a, or the like), clicking of each of various buttons, or the like using the pointing device is detected (step S1).

If the detected operation is that for the slider bar (Yes in step S2), position x of the slider 904a is acquired (step S3). A slide to be displayed is then specified by calculating number i of a corresponding slide based on the numerical value indicating the acquired position using the predetermined formula (step S4).

The specified slide is displayed in the picture display field 902 (step S5), thus ending the process.

On the other hand, if the detected operation is clicking of an arbitrary button or the like (No in step S2), the type of button is identified (step S6), and a process corresponding to the button operation is executed (step S7). For example, upon clicking of the "back" or "next button, a switching instruction of the slide to be displayed is issued.

If the slide to be displayed remains unchanged (No in step S8), the process ends; if the slide to be displayed has changed (Yes in step S8), the slider 904a is moved to a position corresponding to the slide to be displayed (step S9), thus ending the process.

As described above, according to this embodiment, the user need only click an arbitrary position on the bar displayed in the window once to move the slider, and to instantaneously display a desired slide (still picture). Also, by dragging the slider, the user can easily seek a desired slide.

As described above, according to the present invention, a desired still picture can be easily displayed.

## Claims

1. An information processing apparatus comprising:
means (908) for displaying a picture display field (902) to display a plurality of still pictures and an operation field (904) which includes a slider (904a) to designate one of the plurality of still pictures to be displayed; and
means (906 to 908) for controlling to display a still picture having a number corresponding to a position of the slider (904a) in the picture display field (902).

2. The apparatus according to claim 1, **characterized in that** the slider (904a) moves to a position designated by clicking.

3. The apparatus according to claim 1, **characterized in that** the slider (904a) moves in accordance with a drag operation.

4. The apparatus according to claim 1, **characterized by** further comprising:
means (911b) for calculating a number of a still picture to be displayed using at least a total number of still pictures and a numerical value indicating a position of the slider (904a).

5. The apparatus according to claim 1, **characterized in that** the means (906 to 908) for controlling controls to display a number of a still picture to be displayed and a total number of still pictures.

6. The apparatus according to claim 1, **characterized in that** the means (906 to 908) for controlling controls to move the slider (904a) to a position designated by a pointing device, calculate a number of a still picture to be displayed using at least a total number of still pictures and a numerical value indicating a position of the slider (904a), and display a still picture corresponding to the calculated number in the picture display field (902).

7. A display control method for use in an information processing apparatus capable of displaying a picture display field (902) to display a plurality of still pictures, comprising:
displaying an operation field (904) which includes a slider (904a) to designate one of the plurality of still pictures to be displayed; and
controlling to display a still picture having a number corresponding to a position of the slider (904a) in the picture display field (902).

8. The method according to claim 7, **characterized by** further comprising:
moving the slider (904a) to a position designated by clicking.

9. The method according to claim 7, **characterized by** further comprising:
moving the slider (904a) in accordance with a drag operation.

10. The method according to claim 7, **characterized by** further comprising:
calculating a number of a still picture to be displayed using at least a total number of still pictures and a numerical value indicating a position of the slider (904a).

11. The method according to claim 7, **characterized by** further comprising:
displaying a number of a still picture to be displayed and a total number of still pictures.

12. The method according to claim 7, **characterized by** further comprising:
moving the slider (904a) to a position designated by a pointing device;
calculating a number of a still picture to be displayed using at least a total number of still pictures and a numerical value indicating a position of the slider (904a); and
displaying a still picture corresponding to the calculated number in the picture display field (902).
